# FASCICULE DE BREVET EUROPEEN

(11) **EP 3 759 162 B1**
(45) Date de publication et mention de la délivrance du brevet: **23.10.2024**
(21) Numéro de dépôt: 19715540.1
(22) Date de dépôt: 01.03.2019
(51) Int. Cl.: C08J 11/06

(54) **PROCÉDÉ DE TRAITEMENT DU POLYVINYLBUTYRAL (PVB)**
VERFAHREN ZUR BEHANDLUNG VON POLYVINYLBUTYRAL (PVB)
METHOD FOR TREATING POLYVINYL BUTYRAL (PVB)

(30) Priorité: 02.03.2018 FR 1851839
(43) Date de publication de la demande: 06.01.2021
(73) Titulaire: Institut National Polytechnique de Toulouse, 31029 Toulouse (FR); CENTRE NATIONAL DE LA RECHERCHE SCIENTIFIQUE -CNRS-, 75016 Paris (FR)
(72) Inventeur: DENIS, Ghislain, 31560 Calmont (FR); TROMPETTE, Jean-Luc, 31400 Toulouse (FR); DELMAS, Michel, 31320 Auzeville Tolosane (FR)
(74) Mandataire: Plasseraud IP
(86) Numéro de dépôt international: PCT/FR2019/050472
(87) Numéro de publication internationale: WO 2019/166747

(56) Documents cités:
- EP-A1- 1 619 227
- WO-A1-2011/130622
- JP-A- 2016 050 199
- KR-B1- 101 742 493

## Description

### Domaine de l'invention

La présente invention concerne un procédé de traitement de fragments de polyvinylbutyral (PVB).

Par fragments de PVB, on entend un produit comprenant une feuille de PVB sur ou dans laquelle sont incrustés des éclats de verre.

Plus particulièrement la présente invention concerne un procédé d'extraction des éclats de verre restés incrustés dans ou à la surface du PVB lors des opérations de concassage et de broyage de verre feuilleté.

Par «verre feuilleté» on entend un produit constitué de deux ou plusieurs couches de verre chacune séparée de l'autre par une feuille de polyvinylbutyral (PVB) contenant préférentiellement au moins un agent plastifiant ; les feuilles de PVB empêchant, de par leur adhérence sur le verre, l'éclatement du vitrage en cas de bris.

Le PVB est, entre autre, utilisé en industrie automobile pour l'élaboration de pare-brises et dans le secteur de la construction et du bâtiment pour les vitrages isolants et anti-effractions.

Il est donc récupéré parallèlement au verre après concassage et broyage des vitrages mis au rebut.

Le PVB récupéré à l'occasion de la déconstruction de véhicules mais aussi de travaux de démontage et de dépose dans les secteurs de la construction et du bâtiment, représente, dans les pays européens dont la France, un flux annuel de l'ordre de plusieurs dizaines de milliers de tonnes. Souillé par le verre, il est peu valorisé à l'heure actuelle. En effet, la teneur en verre résiduel adhérant à la surface des feuilles de PVB reste trop importante, de l'ordre de quelques dizaines de grammes par m² de PVB, limitant ainsi drastiquement les possibilités de réutilisation dans des applications à haute valeur ajoutée.

Ainsi, le PVB de récupération est au mieux incorporé dans l'industrie des plastiques bas de gamme, brûlé dans des chaudières adaptées ou encore simplement mis en décharge.

Or, l'obtention de PVB recyclé, débarrassé des impuretés aurait pour conséquences :
- de permettre sa revalorisation remplaçant ainsi l'utilisation de PVB neuf, dont le prix est de l'ordre de 10 à 15 euros/kg, pour l'élaboration de vitrages feuilletés ; le PVB recyclé représentant une source d'économies substantielles pour les industries consommatrices,
- d'éviter la mise en décharge du verre feuilleté,
- de recycler du carbone, d'économiser de la matière première ainsi que l'énergie nécessaires à la synthèse du PVB, 1 tonne de PVB recyclé correspondant environ à 2 tonnes de CO₂ économisé (Projet REV3 - La 3ième Révolution Industrielle en Hauts de France, Novembre 2017),
- de contribuer à atteindre l'objectif du taux de recyclage des véhicules qui sera imposé aux constructeurs automobiles dans un futur proche.

### L'art antérieur

A l'heure actuelle, plusieurs voies de traitement et de purification du PVB sont proposées : traitement par fusion du polymère, traitement à l'aide de solvants organiques, et traitement en solution aqueuse.

La méthode par fusion consiste à fondre le PVB à recycler en le portant à une température inférieure à la température de dégradation du polymère puis à retenir les débris de verre sur un filtre (TW 201350334). Cependant, ce procédé présente l'inconvénient d'altérer les propriétés physiques du polymère.

Il a également été proposé de traiter le PVB à recycler en autoclave à chaud par du CO₂ supercritique, nécessitant ainsi de disposer d'une installation coûteuse et élaborée (WO 9705194 A1).

Une autre méthode consiste à dissoudre le PVB à recycler dans un solvant organique à chaud et sous pression puis à filtrer la solution obtenue afin de retenir les particules de verre (DE 19811199, CN 102993456 A, KR 20140122452 A). Cependant, les solvants utilisés sont tous inflammables, nocifs et impliquent un traitement à chaud.

Afin de tenter de remédier aux inconvénients précités, des procédés en milieux aqueux ont été proposés.

Un procédé consiste à plonger le PVB dans une solution de base forte (DE 4213450 C1, WO 9902460 A1) ou dans une solution acide (WO 9902460 A1). Or, l'utilisation de bases fortes telles que la soude ou la potasse altère la structure chimique du polymère par saponification des groupements acétates mais aussi les propriétés mécaniques de ce dernier. De même, l'utilisation d'acides conduit à l'altération de la chaîne du polymère.

Les brevets EP 2308919 A1 et RO 128912 B1 décrivent un procédé de traitement du PVB en milieu acide puis en milieu basique. Cependant, après traitement le PVB est imprégné d'acide et la teneur en verre reste trop élevée.

Une autre méthode consiste à traiter le PVB sous agitation à température élevée en présence d'alcoolates (DE 10301738 A1). Or, l'utilisation de bases fortes telles que les alcoolates altère la structure du PVB. En outre, l'immersion successive des morceaux de PVB dans des bains d'alcoolates à différentes températures est nécessaire, complexifiant ainsi la méthode de traitement.

Il a également été proposé une technique de séparation physique en milieu aqueux en présence d'un tensioactif non-ionique (KR 20160099306 A, KR 20160099305 A). Cependant, l'utilisation de tels tensioactifs ne permet pas d'obtenir des résultats satisfaisants. En particulier, un phénomène de démixtion (point de trouble) est observé lors de l'utilisation de solutions aqueuses de tensioactifs non-ioniques portées à des températures supérieures à 45 °C.

Outre le problème d'altération du polymère, il est important de minimiser la teneur en verre résiduel après traitement.

La proportion de verre restant après le traitement n'est que très rarement mentionnée dans les documents disponibles. Le brevet RO 128912 B1 dans lequel le PVB est traité en milieu acide puis en milieu basique annonce une pureté finale de 99% soit un résidu de 10 g d'impureté(s) par kilogramme de produit fini. Le brevet DE 19509244 C1 où l'on trouve une addition de tensioactifs mentionne un taux de verre résiduel de 0,012 kg pour 100 kg de PVB soit 0,012% c'est-à-dire 0,12 g par kilogramme.

EP 1 619 227 A1 décrit un procédé de séparation de verre stratifié dans lequel des tensioactifs de tous types sont utilisés comme simples agents mouillants. Cependant, EP 1 619 227 A1 ne décrit pas la combinaison spécifique d'une base faible, d'un tensioactif cationique, d'ultrasons et de la température.

WO 2011/130622 A1 concerne un procédé de recyclage de circuits imprimés. Ce procédé ne concerne pas la séparation du verre et du PVB. En outre, les tensioactifs y sont utilisés de façon optionnelle dans le traitement de métaux, et plus particulièrement pour la lixiviation.

Il ressort donc de ce qui précède qu'aucune des techniques proposées à l'heure actuelle ne permet d'obtenir un produit fini de haute qualité, i.e. produit à haut degré de pureté, sans altération de la structure chimique du PVB ou de ses propriétés mécaniques, tout en minimisant les coûts et l'impact environnemental liés au recyclage du PVB.

Or, les présents inventeurs ont mis au point un procédé de traitement du PVB présentant un excellent compromis entre ces différents critères.

En particulier, les présents inventeurs ont découvert que l'action combinée, simultanée et complémentaire d'une base faible, d'un tensioactif cationique et d'ultrasons, à température adéquate, permettait de détacher et/ou de désincruster les éclats de verre fixés sur le PVB recueilli sans pour autant dégrader la matrice du polymère ou ses propriétés mécaniques.

Le document KR 101742493 B1 divulgue un dispositif et une méthode pour séparer le PVB du verre. Dans KR 101742493 B1, un agent de séparation comprenant du métasilicate de sodium, un tensioactif non-ionique, de la potasse et de la soude est utilisé.

Le document JP 2016/050199 A divulgue un produit anti-moisissure à base d'oxygène.

### Résumé de l'invention

Ainsi, l'invention, concerne un procédé de traitement de fragments de polyvinylbutyral (PVB) présentant des éclats de verre dans ou à la surface du PVB,
le procédé comprenant les étapes suivantes :
- mise en contact des fragments de PVB avec une solution aqueuse comprenant un tensioactif cationique et une base faible afin d'obtenir un mélange,
- soumission dudit mélange aux ultrasons, et
- désolidarisation des éclats de verre et du PVB.

### Descriptif détaillé

L'invention concerne un procédé de traitement de fragments de polyvinylbutyral (PVB) présentant des éclats de verre dans ou à la surface du PVB,
le procédé comprenant les étapes suivantes :
- mise en contact des fragments de PVB avec une solution aqueuse comprenant un tensioactif cationique et une base faible afin d'obtenir un mélange,
- soumission dudit mélange aux ultrasons, et
- désolidarisation des éclats de verre et du PVB.

Le procédé consiste à mettre en contact des fragments de PVB avec une solution aqueuse, ladite solution aqueuse comprenant un tensioactif cationique et une base faible afin d'obtenir un mélange. Celui-ci, une fois soumis aux ultrasons dans une plage définie de température, conduit à la désolidarisation des éclats de verre et du PVB.

Plus particulièrement la présente invention concerne un procédé d'extraction des éclats de verre restés incrustés dans ou à la surface du PVB lors des opérations de concassage et de broyage de verre feuilleté.

Par «verre feuilleté» on entend un produit constitué de deux ou plusieurs couches de verre chacune séparée de l'autre par une feuille de polyvinylbutyral (PVB) contenant préférentiellement au moins un agent plastifiant ; les feuilles de PVB empêchant, de par leur adhérence sur le verre, l'éclatement du vitrage en cas de bris.

De manière avantageuse, ledit au moins un agent plastifiant est choisi dans le groupe consistant en celui des esters de l'acide heptanoïque avec le triéthylene glycol ou le tetraéthylene glycol.

Par «désolidarisation» du verre et du PVB on entend la désincrustation des éclats de verre du PVB.

Par verre, on entend tout type de verre non composite, qu'il soit étiré, coulé, teinté, transparent, translucide ou opaque, gravé, ou traité d'une autre manière.

Lors de la préparation de la solution aqueuse, la base faible peut être ajoutée avant ou après le tensioactif cationique, et de préférence avant. Dans le cas où la base faible est ajoutée après le tensioactif cationique, le procédé selon l'invention peut comprendre une étape de chauffage.

L'homme du métier sera à même de choisir la température de chauffage appropriée afin de dissoudre le tensioactif cationique et d'éviter la dégradation de ce dernier.

De manière avantageuse, la solution aqueuse est chauffée entre 30 et 50 °C, de préférence entre 35 et 45 °C, et encore plus préférentiellement aux environs de 40 °C.

De manière avantageuse, la température du mélange soumis aux ultrasons est comprise entre 40 et 70 °C, de préférence entre 45 et 65 °C, de préférence entre 50 et 60 °C, et encore plus préférentiellement entre 55 et 58 °C.

De manière avantageuse, la température du mélange soumis aux ultrasons est choisie spécifiquement de façon à :
- limiter l'évaporation de la solution aqueuse pendant le traitement de façon à conserver un ratio [masse de PVB à traiter / volume solution] constant préservant ainsi l'efficacité du procédé,
- réduire au mieux les tensions de surface aux interfaces considérées, *i.e.* interfaces verre/eau et PVP/eau, et
- d'augmenter la cinétique d'attaque de la surface du verre par la base faible.

Lorsque la température du mélange soumis aux ultrasons est inférieure à 40°C, les tensions de surface aux interfaces considérées ne sont pas suffisamment abaissées et la cinétique d'attaque de la surface du verre par la base faible n'est pas suffisamment élevée pour obtenir une bonne séparation du verre et du PVB.

Lorsque la température du mélange soumis aux ultrasons est supérieure à 70 °C, l'évaporation significative de la solution aqueuse nuit à l'efficacité du procédé de séparation, et à celle du processus de cavitation.

De manière avantageuse, la base faible présente la formule générale suivante :

Formule (I) : M₂CO₃,

dans laquelle M représente un métal alcalin.

De manière avantageuse, ladite base faible est choisie parmi le carbonate de potassium ou le carbonate de sodium.

Les bases faibles de la présente invention sont certifiées ECOCERT, n'endommagent pas les matériaux et appareils utilisés pour le procédé et ne présentent aucun danger particulier pour leur utilisateur.

Ainsi, la base faible de la présente invention permet de fragiliser la structure des éclats de verre en surface, diminuant ainsi leur adhésion sur le polymère sans pour autant dégrader ce dernier. Plus particulièrement, en milieu alcalin le verre est davantage attaqué en surface quand la température augmente.

De manière avantageuse, ladite solution aqueuse comprenant un tensioactif cationique et une base faible présente un pH basique compris entre 8 et 14, de préférence compris entre 11 et 13 et encore plus préférentiellement environ égal à 12.

L'homme du métier sera à même de choisir la quantité de base appropriée afin d'obtenir un pH basique compris entre 8 et 14, de préférence compris entre 11 et 13 et encore plus préférentiellement environ égal à 12.

Typiquement, la solution aqueuse comprend entre 3 et 10% en masse, de préférence entre 4 et 8% en masse, et encore plus préférentiellement entre 5 et 7% en masse de base faible par rapport à la masse totale de ladite solution aqueuse.

De manière avantageuse, le tensioactif cationique est choisi parmi les sels d'halogénures d'ammonium quaternaires.

De manière avantageuse, le tensioactif cationique est un sel d'halogénure d'ammonium quaternaire répondant à la formule générale (II) suivante : 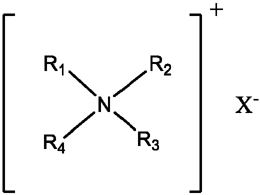 dans laquelle R₁ à R₃ représentent chacun un groupe méthyle, R₄ représente une chaine alkyle linéaire ou ramifiée, de préférence linéaire, comprenant entre 8 et 30, de préférence entre 10 et 24 et encore plus préférentiellement entre 10 et 18 atomes de carbone et où X représente un halogénure.

Par «halogénure» on entend le fluorure, le chlorure, le bromure et l'iodure, de préférence le chlorure et le bromure.

De manière avantageuse, le tensioactif cationique présente un HLB compris entre 20 et 25.

De préférence, le tensioactif est un halogénure de cétyltriméthylammonium de formule (C₁₆H₃₃)N(CH₃)₃X, dans laquelle X représente un halogénure.

Les tensioactifs de la présente invention sont utilisés en cosmétique et leur utilisation est non dangereuse.

L'homme du métier sera à même de choisir la quantité de tensioactif cationique appropriée afin d'obtenir la concentration micellaire critique à la température de traitement.

Typiquement, la solution aqueuse comprend entre 0,03 et 0,4% en masse, de préférence entre 0,04 et 0,3% en masse, et encore plus préférentiellement entre 0,05 et 0,2% en masse de tensioactif cationique par rapport à la masse totale de ladite solution aqueuse.

Dans la présente invention, le rôle des tensioactifs va au-delà de l'effet mouillant inhérent à tout tensioactif. Par «effet mouillant» on entend la diminution de la tension superficielle de la solution favorisant ainsi le contact de la solution avec le support à traiter.

Lorsque la solution de tensioactif cationique est utilisée au contact des fragments de PVB sur lesquels les éclats de verre sont incrustés, non-seulement l'effet de mouillage est favorisé mais des molécules de tensioactif cationique s'adsorbent spécifiquement via leurs têtes polaires sur les éclats de verre et d'autres s'adsorbent à la surface hydrophobe du PVB par leurs chaînes alkyles. Ces adsorptions concomitantes des tensioactifs sont responsables de la diminution des tensions de surface correspondantes, *i*.*e*. verre/eau et PVB/eau, diminuant ainsi l'adhésion des éclats de verre sur le PVB et favorisant leur désincrustation.

En particulier, les éclats de verre, qui sont essentiellement composés de silice, acquièrent une charge négative en surface au contact de la solution aqueuse au pH basique utilisé. De par sa nature cationique, le tensioactif de la présente invention possède une tête polaire chargée positivement qui permet son adsorption par attraction électrostatique sur les sites actifs négativement chargés à la surface des éclats de verre. Simultanément, des tensioactifs cationiques peuvent s'adsorber sur la surface du PVB par le biais de leur chaîne alkyle (hydrophobe). Cette adsorption des tensioactifs aux interfaces considérées, alliée à l'effet déstabilisateur de la base douce, conduit à une diminution de l'énergie d'adhésion des éclats de verre sur le PVB. Ces phénomènes sont renforcés à température plus élevée où les tensions de surface sont davantage diminuées.

La solution aqueuse de la présente invention ne contient pas de composés agressifs, toxiques, inflammables ou dangereux pour l'environnement.

En particulier, le procédé selon l'invention ne fait pas intervenir de solvants organiques toxiques ou inflammables, ni de substances minérales notablement corrosives telles que des bases fortes ou des acides forts.

Le procédé selon l'invention est mis en œuvre en milieu aqueux à pression atmosphérique et à température modérée permettant ainsi d'éviter la formation de gaz ou de vapeurs, et ce avec des équipements standardisés, couramment utilisés en industrie, respectant les normes en vigueur en France et dans l'UE. La mise en œuvre du procédé selon l'invention à pression atmosphérique et dans des conditions douces ne nécessite aucune installation technologiquement complexe ou excessivement élaborée et est donc peu coûteuse.

Le mélange des fragments de PVB, du tensioactif cationique et de la base faible est agité mécaniquement tout en étant soumis aux ultrasons. Les ultrasons sont générés in situ de façon à créer des ondes de cavitation dans la solution qui contribuent à détacher plus aisément les éclats de verre lors de leur impact sur le PVB.

De manière avantageuse, les ultrasons sont appliqués à une fréquence allant de 20 à 100 kHz, de préférence de 35 à 90 kHz et encore plus préférentiellement de 37 à 80 kHz.

De manière avantageuse, les ultrasons sont appliqués pendant une durée allant de 0,5 à 4 heures, de préférence de 0,8 à 2,5 heures et encore plus préférentiellement de 1 à 2 heures.

Les ultrasons permettent la fragilisation des liaisons verre-polymère et accentuent l'attaque à la surface du verre par la base.

En particulier, les ultrasons permettent de générer des microbulles de cavitation dont la taille est comparable à celle des éclats de verre à désincruster de la surface. L'onde ultrasonique, en se propageant dans le bain, provoque des successions de surpression/dépression qui engendrent la formation de microbulles responsables de la cavitation. Les bulles de cavitation grossissent de manière cyclique jusqu'à atteindre une taille critique avant d'imploser. Lors de l'implosion, où la température et la pression locale peuvent être très élevées, le jet radial de vapeur contenu à l'intérieur de celles-ci avoisine des vitesses de l'ordre de 100 mètres par seconde, provoquant un effet désincrustant majeur pour les éclats de verre. La taille des bulles est liée à la fréquence des ultrasons : 10 micromètres environ pour une fréquence ultrasonique de l'ordre d'une trentaine de kHz, quelques micromètres pour une fréquence ultrasonique de l'ordre de la centaine de kHz. La désincrustation des éclats de verre du PVB par le procédé sous ultrasons n'est efficace qu'avec un tensioactif cationique et en milieu basique tel que précédemment défini.

En outre, dans le procédé selon l'invention, le mélange est soumis à une agitation mécanique à l'aide d'un agitateur, de préférence à l'aide d'une pale. L'agitation mécanique du milieu permet d'éviter que les feuilles de PVB dans la solution aqueuse ne se plaquent les unes aux autres.

Le procédé selon l'invention fait donc intervenir un ensemble de phénomènes à la fois physiques et chimiques permettant d'obtenir une bonne séparation entre les éclats de verre et le PVB dans une plage définie de température :
- la base faible permet de fragiliser la surface des éclats de verre favorisant la séparation,
- le tensioactif favorise la mise en suspension des éclats de verre, et
- les ultrasons fragilisent les liaisons verre-polymère et accentuent l'attaque du verre en surface par la base.

C'est donc l'action combinée, simultanée et complémentaire de la base faible, du tensioactif cationique, des ultrasons et de la température tels que définis ci-dessus qui permet de détacher et/ou de désincruster au mieux les éclats de verre fixés au PVB.

De manière avantageuse, la teneur résiduelle en verre est inférieure à 100 mg/m² de PVB, de préférence inférieure à 50 mg/m² de PVB et encore plus préférentiellement inférieure à 30 mg/m² de PVB. Ainsi, la teneur en verre résiduel du PVB après traitement est très basse.

Cette teneur résiduelle en verre est mesurée par comptage des éclats de verre au microscope optique et par mesure de la teneur en silicium avec une sonde EDX.

De manière avantageuse, la pureté du PVB après traitement est évaluée par microscopie électronique à balayage, calorimétrie différentielle à balayage, fluorescence X et/ou spectroscopie infrarouge à transformée de Fourier FTIR.

De manière avantageuse, le procédé selon l'invention comprend en outre une étape de séparation entre :
a) ladite solution aqueuse comprenant un tensioactif cationique et une base faible,
b) les éclats de verre, et
c) le PVB.

De manière avantageuse, l'étape de séparation s'effectue par filtration, sédimentation, décantation ou centrifugation, de préférence par sédimentation.

De manière avantageuse, après sédimentation les plaquettes de PVB sont récupérées directement.

De manière avantageuse, le procédé selon l'invention comprend en outre une étape de rinçage à l'eau et de séchage à l'air.

La consommation négligeable des composés utilisés pour le traitement de fragments de PVB permet le ré-emploi de la solution aqueuse après épuration de celle-ci (par filtration ou centrifugation ou sédimentation) pour retirer les éclats de verre précédemment désincrustés. Dans le cas d'une filtration, celle-ci peut être effectuée en continu pendant le traitement par l'action d'une pompe au travers d'un filtre en assurant la recirculation du milieu réactionnel à l'extérieur du bain soumis aux ultrasons.

Les inventeurs de la présente invention ont découvert que seule l'action combinée, simultanée et complémentaire d'une base faible, d'un tensioactif cationique et d'ultrasons, à température adéquate, permettait de détacher et/ou de désincruster les éclats de verre fixés sur le PVB sans pour autant dégrader la matrice du polymère ni ses propriétés mécaniques.

C'est incontestablement la combinaison des quatre facteurs agissant ensemble qui produit un effet significatif en terme d'extraction/de désincrustation des éclats de verre de la surface du PVB.

On obtient ainsi par le procédé de la présente invention une désolidarisation entre les éclats de verre et le PVB. Ce procédé n'entraîne pas de réaction chimique entre la solution aqueuse et le PVB.

En résumé, le PVB et les éclats de verre sont séparés et la structure du PVB n'est pas altérée par cette solution aqueuse. Dans le domaine de l'hygiène et de la sécurité, il n'est à craindre aucune émanation dans le milieu ambiant. Le traitement se fait donc en circuit quasiment fermé. La consommation d'eau est très faible.

En conclusion, le procédé selon la présente invention permet d'obtenir après traitement un produit fini de haute qualité, i.e. produit à haut degré de pureté, dont la structure chimique et les propriétés mécaniques du PVB, ne sont pas altérées, tout en minimisant les coûts et l'impact environnemental liés au recyclage du PVB.

Il doit être entendu que la présente invention n'est en aucune façon limitée à la forme de réalisation indiquée ci-dessus et que bien des modifications peuvent y être apportées sans sortir du cadre des revendications annexées.

L'invention sera maintenant illustrée par les exemples non limitatifs suivants.

### Exemples

### Protocoles de tests

### Mesure de la teneur en verre résiduel du PVB après traitement

### 1. Microscopie optique

Les échantillons de PVB traités sont examinés à l'aide d'un microscope optique MEOPTA CZ au grossissement × 200. Le nombre de particules (éclats) de verre qui sont présentes dans le champ visuel de 1 mm² (échelle graduée de l'oculaire) est évalué. Ce comptage réalisé sur une dizaine de champs différents permet de déterminer le nombre moyen d'éclats de verre par m². Le volume moyen des particules est estimé grâce à cette échelle graduée. Le produit du volume moyen par le nombre des particules et par la masse volumique du verre (2,5 g/cm³) donne la masse de verre résiduel par m².

### 2. Spectroscopie des rayons-X Dispersive en Energie (EDX ou EDS)

Le spectromètre couplé à un microscope électronique à balayage (MEB) permet d'obtenir la nature chimique des éléments à la surface de l'échantillon ainsi que leur quantification. Le rayonnement X émis par le silicium Si (qui compose le verre SiO₂) à sa longueur d'onde caractéristique est capté par le détecteur du spectromètre puis est traité par le logiciel dont la base de données, incluant le coefficient de réponse de la raie X du silicium, conduit à sa quantification.

### Mesure de la pureté du PVB après traitement

### 1. Spectroscopie infrarouge à transformée de Fourier (FTIR)

Les mesures sont effectuées à l'aide d'un microscope infrarouge à transformée de Fourier (Spectrum Spotlight 300, Perkin Elmer). Les spectres obtenus sont enregistrés et comparés à une base de données contenant environ 50 000 spectres de produits organiques, organométalliques et minéraux à des fins d'indentification.

### 2. Calorimétrie différentielle à balayage (DSC)

Cette technique consiste à mesurer la différence entre les flux thermiques qui pénètrent dans un creuset échantillon et dans un creuset référence en fonction de la température, ces deux creusets étant soumis à un programme de température prédéfini dans une atmosphère spécifiée. Elle permet la détermination des chaleurs de réaction, des températures de transition vitreuse, et des températures de fusion.

Le creuset référence est un creuset en Aluminium de 40 µl vide, dont le couvercle est percé d'un trou.

Environ 10 mg d'échantillon sont pesés dans un creuset identique. Les mesures sont effectuées à l'aide d'une DSC 3+ de Mettler, sous atmosphère d'azote.

Méthode d'analyse :
- chauffage de 25 à 250 °C à 10 °C/min sous atmosphère inerte (azote) à un débit de 200 ml/min,
- palier de 2 minutes à 250 °C,
- refroidissement de 250 à -70 °C à 10 °C/min sous azote à un débit de 200 ml/min,
- palier de 5 minutes à -70 °C,
- chauffage de -70 à 250 °C à 10 °C/min sous atmosphère inerte (azote) à un débit de 200 ml/min.

### 3. Fluorescence X

L'échantillon est métallisé à l'or avant d'être analysé en fluorescence en utilisant un microscope électronique à balayage (MEB) de marque LEO 1455 VP, sur lequel est couplée une sonde d'analyse OXFORD EDX (dispersion d'énergie).

### Descriptif des figures

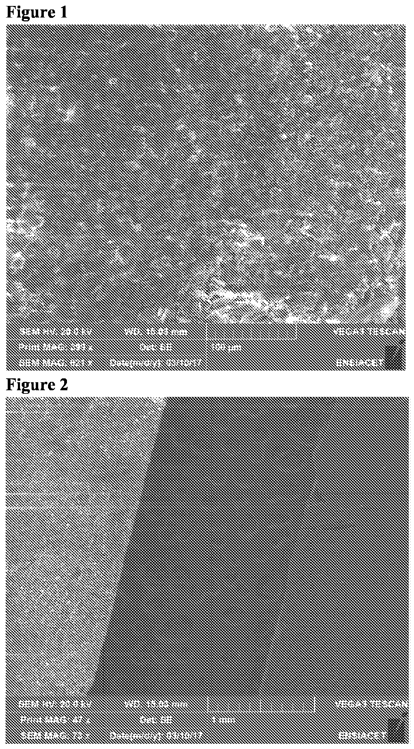

La figure 1 est un cliché MEB (grandissement × 621) d'un échantillon de PVB avant traitement.
La figure 2 est un cliché MEB (grandissement × 73) d'un échantillon PVB avant (à gauche) et après traitement (à droite) déposés sur un même plot (recouvert de l'adhésif au carbone, au centre)

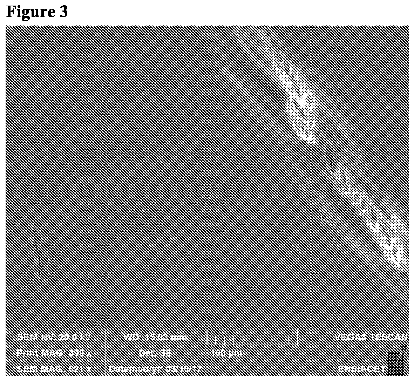

La figure 3 est un cliché MEB (grandissement × 621) d'un échantillon de PVB après traitement.

### Exemple 1

Cent grammes de morceaux de feuilles de PVB issues du concassage de vitrage feuilleté (fragments de PVB) sont immergés dans une solution aqueuse de volume 1 litre comprenant 53 grammes de carbonate de sodium (0,5 mole) et 0,655 g de tensioactif cationique (0,0018 mole de bromure de triméthylcétylammonium au voisinage de sa concentration micellaire critique à la température du traitement). Le mélange est soumis aux ultrasons produits par une cuve Elmasonic P30H avec une puissance ultrasonique de 100 Watts délivrée à la fréquence de 80 kHz, pendant 1,5 heures. La température du milieu réactionnel se stabilise entre 55 et 58 °C. Un dispositif classique d'agitation mécanique assure la dispersion des fragments de PVB dans le milieu.

A l'arrêt, les morceaux de plastique traités (PVB) sédimentent et sont récupérés, puis ils sont rincés à l'eau et séchés à l'air.

### Mesure de la teneur résiduelle en verre :

L'estimation par comptage des éclats de verre au microscope optique et l'analyse de la teneur en silicium par sonde EDX font apparaître une teneur résiduelle en verre inférieure à 30 milligrammes par mètre carré de PVB.

### Exemple 2

Cent grammes de morceaux de feuilles de PVB issues du concassage de vitrage feuilleté (fragments de PVB) sont immergés dans une solution aqueuse de volume 1 litre comprenant 69 grammes de carbonate de potassium (0,5 mole) et 2 g de tensioactif cationique (0,0063 moles de chlorure de triméthylcétylammonium au voisinage de sa concentration micellaire critique à la température du traitement). Le mélange est soumis aux ultrasons produits par une cuve Elmasonic P30H avec une puissance ultrasonique de 120 Watts délivrée à la fréquence de 37 kHz, pendant 1,5 heures. La température du milieu réactionnel se stabilise entre 55 et 58 °C. Un dispositif classique d'agitation mécanique assure la dispersion des fragments de PVB dans le bain.

A l'arrêt, les morceaux de plastique traités (PVB) sédimentent et sont récupérés, puis ils sont rincés à l'eau et séchés à l'air.

### Mesure de la teneur résiduelle en verre :

L'estimation par comptage des éclats de verre au microscope optique et l'analyse de la teneur en silicium par sonde EDX font apparaître une teneur résiduelle en verre voisine de 50 milligrammes par mètre carré de PVB.

### Exemple 3

Cent grammes de morceaux de feuilles de PVB issues du concassage de vitrage feuilleté (fragments de PVB) sont immergés dans une solution aqueuse de volume 1 litre comprenant 53 grammes de carbonate de sodium (0,5 mole) et 0,655 g de tensioactif cationique (0,0018 mole de bromure de triméthylcétylammonium au voisinage de sa concentration micellaire critique à la température du traitement). Le mélange est soumis aux ultrasons produits par une cuve Elmasonic P30H avec une puissance ultrasonique de 120 Watts délivrée à la fréquence de 37 kHz, pendant 0,5 heure dans la cuve remplie d'eau. La fréquence des ultrasons est ensuite changée pour la valeur de 80 kHz pendant 0,5 heure à la puissance ultrasonique de 100 Watts. La température du milieu réactionnel se stabilise entre 55 et 58 °C. Un dispositif classique d'agitation mécanique assure la dispersion des fragments de PVB dans le bain pendant toute la durée de l'opération.

A l'arrêt, les morceaux de plastique traités (PVB) sédimentent et sont récupérés, puis ils sont rincés à l'eau et séchés à l'air.

### Mesure de la teneur résiduelle en verre :

L'estimation par comptage des éclats de verre au microscope optique et l'analyse de la teneur en silicium par sonde EDX font apparaître une teneur résiduelle en verre inférieure à 30 milligrammes par mètre carré de PVB.

### Exemples comparatifs :

A des fins comparatives, différents tests ont été effectués selon le protocole des exemples 1 ou 2 ou 3 en faisant varier la nature du tensioactif et de la base, la présence ou non de ces derniers, la fréquence des ultrasons et la température du milieu réactionnel.

Les résultats sont présentés dans le tableau 1.

### Résultats :

**Tableau 1**

| | **Tensioactif** | **Base** | **Ultrasons** | **Conditions** | **Analyse** |
|---|---|---|---|---|---|
| **Exemple 1** | Bromure de triméthylcétylammonium | Na₂CO₃ | 100 Watts à 80 kHz | | < 30 mg de verre / m² de PVB |
| **Exemple 2** | Chlorure de triméthylcétylammonium | K₂CO₃ | 120 Watts à 37 kHz | | environ 50 mg de verre / m² de PVB |
| **Exemple 3** | Bromure de triméthylcétylammonium | Na₂CO₃ | 120 Watts à 37 kHz puis à 80 kHz | | < 30 mg de verre / m² de PVB |
| **Exemple comparatif 1** | Aucun | Na₂CO₃ | 100 Watts à 80 kHz | Selon le protocole de l'exemple 1 sans ajout de tensioactif | 0,8 à 1,6 g de verre / m² de PVB |
| **Exemple comparatif 2** | Chlorure de triméthylcétylammonium | K₂CO₃ | Pas d'ultrasons | Selon le protocole de l'exemple 2 sans ultrasons | 1 à 2 g de verre / m² de PVB |
| **Exemple comparatif 3** | Bromure de triméthylcétylammonium | Aucune | 100 Watts à 80 kHz | Selon le protocole de l'exemple 1 sans ajout de base | 0,8 à 1,6 g de verre / m² de PVB |
| **Exemple comparatif 4** | Tensioactif non-ionique Triton TX100 | K₂CO₃ | 120 Watts à 37 kHz | Selon le protocole de l'exemple 2 | 2 g de verre / m² de PVB |
| **Example comparatif 5** | Tensioactif anionique SDS | K₂CO₃ | 120 Watts à 37 kHz puis à 80 kHz | Selon le protocole de l'exemple 3 | 0,3 à 0,8 g de verre / m² de PVB |
| **Example comparatif 6** | Bromure de triméthylcétylammonium | Na₂CO₃ | 120 Watts à 37 kHz puis à 80 kHz | Selon le protocole de l'exemple 3 mais avec la température du milieu réactionnel stabilisée entre 35 et 38 °C | 3 à 5 g de verre / m² de PVB |

### Conclusion :

La désincrustation des éclats de verre effectuée en l'absence d'un des quatre facteurs (la base, le tensioactif cationique, les ultrasons et la température) a conduit à des résultats non satisfaisants.

En particulier, en dehors des plages de température revendiquées, la séparation des éclats de verre et du PVB n'est pas satisfaisante. De même, l'utilisation d'un tensioactif anionique ou non-ionique ne permet pas d'obtenir des résultats satisfaisants.

C'est incontestablement la combinaison des quatre facteurs agissant ensemble qui produit un effet significatif en terme d'extraction/de désincrustation des éclats de verre de la surface du PVB.

## Revendications

1. Procédé de traitement de fragments de polyvinylbutyral (PVB) présentant des éclats de verre dans ou à la surface du PVB, le procédé comprenant les étapes suivantes :
- mise en contact des fragments de PVB avec une solution aqueuse comprenant un tensioactif cationique et une base faible afin d'obtenir un mélange,
- soumission dudit mélange aux ultrasons, et
- désolidarisation des éclats de verre et du PVB,
la température du mélange soumis aux ultrasons étant comprise entre 40 et 70 °C.

2. Procédé de traitement selon la revendication 1, comprenant en outre une étape de séparation entre :
a) ladite solution aqueuse comprenant un tensioactif cationique et une base faible,
b) les éclats de verre, et
c) le PVB.

3. Procédé de traitement selon la revendication 2, **caractérisé en ce que** l'étape de séparation s'effectue par filtration, sédimentation, décantation ou centrifugation.

4. Procédé de traitement selon la revendication 1 à 3, comprenant en outre une étape de rinçage à l'eau et de séchage à l'air.

5. Procédé de traitement selon la revendication 1 à 4, **caractérisé en ce que** la base faible présente la formule générale suivante :
Formule (I) : M₂CO₃,
dans laquelle M représente un métal alcalin.

6. Procédé selon la revendication 5, **caractérisé en ce que** la base faible est choisie parmi le carbonate de potassium ou le carbonate de sodium.

7. Procédé de traitement selon la revendication 1 à 6, **caractérisé en ce que** ladite solution aqueuse comprenant un tensioactif cationique et une base faible présente un pH basique compris entre 8 et 14, de préférence compris entre 11 et 13 et encore plus préférentiellement environ égal à 12.

8. Procédé selon la revendication 1 à 7, **caractérisé en ce que** la température du mélange soumis aux ultrasons est comprise entre 45 et 65 °C, de préférence entre 50 et 60 °C, et encore plus préférentiellement entre 55 et 58 °C.

9. Procédé selon la revendication 1 à 8, **caractérisé en ce que** le tensioactif cationique est choisi parmi les sels d'halogénures d'ammonium quaternaires.

10. Procédé selon la revendication 9, **caractérisé en ce que** le tensioactif cationique est un sel d'ammonium quaternaire répondant à la formule générale (II) suivante : 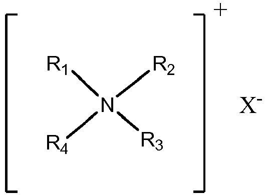 dans laquelle R₁ à R₃ représentent chacun un groupe méthyle, R₄ représente une chaine alkyle linéaire ou ramifiée, de préférence linéaire comprenant entre 8 et 30, de préférence entre 10 et 24 et encore plus préférentiellement entre 10 et 18 atomes de carbone et où X représente un halogénure.

11. Procédé selon la revendication 1 à 10, **caractérisé en ce que** le tensioactif cationique présente un HLB compris entre 20 et 25.

12. Procédé selon la revendication 1 à 11, **caractérisé en ce que** le tensioactif cationique est un sel d'halogénure de cétyltriméthylammonium.

## Patentansprüche

1. Methode zur Behandlung von Fragmenten von Polyvinylbutyral (PVB), die Glassplitter in oder auf der Oberfläche des PVB aufweisen, wobei die Methode die folgenden Schritte umfasst:
- Inkontaktbringen der PVB-Fragmente mit einer wässrigen Lösung, die ein kationisches Tensid und eine schwache Base umfasst, um eine Mischung zu erhalten,
- Anwenden von Ultraschall auf die Mischung, und
- Trennen der Glassplitter und des PVB, wobei die Temperatur der dem Ultraschall unterworfenen Mischung zwischen 40 °C und 70 °C liegt.

2. Behandlungsmethode nach Anspruch 1, ferner umfassend einen Schritt der Trennung zwischen :
a) der wässrigen Lösung, die ein kationisches Tensid und eine schwache Base umfasst,
b) den Glassplittern und
c) dem PVB.

3. Behandlungsmethode nach Anspruch 2, **dadurch gekennzeichnet, dass** der Trennschritt durch Filtration, Sedimentation, Dekantieren oder Zentrifugieren erfolgt.

4. Behandlungsmethode nach Anspruch 1 bis 3, welche ferner einen Schritt des Spülens mit Wasser und des Trocknens mit Luft umfasst.

5. Behandlungsmethode nach Anspruch 1 bis 4, **dadurch gekennzeichnet, dass** die schwache Base die folgende allgemeine Formel aufweist:
Formel (I): M₂CO₃,
wobei M ein Alkalimetall darstellt.

6. Methode nach Anspruch 5, **dadurch gekennzeichnet, dass** die schwache Base aus Kaliumcarbonat oder Natriumcarbonat gewählt ist.

7. Behandlungsmethode nach Anspruch 1 bis 6, **dadurch gekennzeichnet, dass** die wässrige Lösung, die ein kationisches Tensid und eine schwache Base umfasst, einen basischen pH-Wert zwischen 8 und 14, bevorzugt zwischen 11 und 13 und stärker bevorzugt etwa gleich 12, aufweist.

8. Methode nach Anspruch 1 bis 7, **dadurch gekennzeichnet, dass** die Temperatur der dem Ultraschall unterworfenen Mischung zwischen 45 und 65 °C, bevorzugt zwischen 50 und 60 °C und noch bevorzugter zwischen 55 und 58 °C liegt.

9. Methode nach Anspruch 1 bis 8, **dadurch gekennzeichnet, dass** das kationische Tensid aus quaternären Ammoniumhalogenidsalzen gewählt ist.

10. Methode nach Anspruch 9, **dadurch gekennzeichnet, dass** das kationische Tensid ein quaternäres Ammoniumsalz mit der folgenden allgemeinen Formel (II) ist: 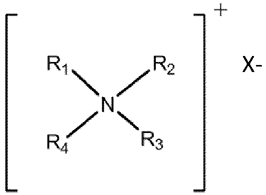 wobei R₁ bis R₃ jeweils für eine Methylgruppe stehen, R₄ für eine lineare oder verzweigte, bevorzugt lineare Alkylkette steht, die zwischen 8 und 30, bevorzugt zwischen 10 und 24 und stärker bevorzugt zwischen 10 und 18 Kohlenstoffatomen umfasst, und wobei X für ein Halogenid steht.

11. Methode nach Anspruch 1 bis 10, **dadurch gekennzeichnet, dass** das kationische Tensid einen HLB-Wert zwischen 20 und 25 aufweist.

12. Methode nach Anspruch 1 bis 11, **dadurch gekennzeichnet, dass** das kationische Tensid ein Cetyltrimethylammoniumhalogenidsalz ist.

## Claims

1. Method for treating fragments of polyvinyl butyral (PVB) having glass shards in or on the surface of the PVB, the method comprising the following steps:
- bringing the PVB fragments into contact with an aqueous solution comprising a cationic surfactant and a weak base, to obtain a mixture,
- subjecting said mixture to ultrasound, and
- separating the glass shards and the PVB,
the temperature of the mixture subjected to ultrasound being between 40 and 70°C.

2. Treatment method according to claim 1, further comprising a step of separating:
a) said aqueous solution comprising a cationic surfactant and a weak base,
b) the glass shards, and
c) the PVB.

3. Treatment method according to claim 2, wherein the separation step is carried out by filtration, sedimentation, decantation, or centrifugation.

4. Treatment method according to claim 1 to 3, further comprising a step of rinsing with water and air drying.

5. Treatment method according to claim 1 to 4, wherein the weak base has the following general formula:
Formula (I): M₂CO₃,
where M represents an alkali metal.

6. Method according to claim 5, wherein the weak base is chosen among potassium carbonate or sodium carbonate.

7. Treatment method according to claim 1 to 6, wherein said aqueous solution comprising a cationic surfactant and a weak base has a basic pH of between 8 and 14, preferably between 11 and 13, and even more preferably approximately equal to 12.

8. Method according to claim 1 to 7, wherein the temperature of the mixture subjected to ultrasound is between 45 and 65°C, preferably between 50 and 60°C, and even more preferably between 55 and 58°C.

9. Method according to claim 1 to 8, wherein the cationic surfactant is chosen from the quaternary ammonium halide salts.

10. Method according to claim 9, wherein the cationic surfactant is a quaternary ammonium salt corresponding to the following general formula (II): 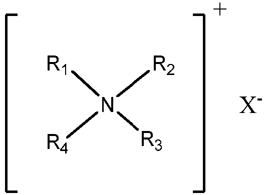 where R₁ to R₃ each represent a methyl group, R₄ represents a linear or branched alkyl chain, preferably linear, comprising between 8 and 30, preferably between 10 and 24, and even more preferably between 10 and 18 carbon atoms, and where X represents a halide.

11. Method according to claim 1 to 10, wherein the cationic surfactant has an HLB of between 20 and 25.

12. Method according to claim 1 to 11, wherein the cationic surfactant is a cetyltrimethylammonium halide salt.
